# EUROPEAN PATENT APPLICATION

(11) **EP 2 429 103 A2**
(43) Date of publication of application: **14.03.2012**
(21) Application number: 11168001.3
(22) Date of filing: 28.05.2011
(51) Int. Cl.: H04H 20/57, H04N 21/4363, H04N 21/41, H04N 21/414

(54) **Audio and video transmission and reception in business and entertainment environments**

(30) Priority: 28.05.2010 US 349320 P; 27.05.2011 US 118355
(71) Applicant: Argosy, LLC, Germantown, MD 20874 (US)
(72) Inventor: Harres, Axel, Columbia, SC South Carolina 29204 (US); Constance,Betty, Germantown, MD Maryland 20874 (US); Sweeney, Robert E., Potomac, MD 20854 (US)
(74) Representative: Virdee-Crofts, Kulwinder Kaur

(57) **Abstract**

Transmitters convert audio and/or video signals into wireless communication signals. Smart phones, personal data assistants and/or other audio/video electronic devices are programmed to detect the wireless communications signals and display them to users. A user selects a desired signal and the smartphone receives the signal and converts it into an audio and/or video signal, which is recorded and/or output. The transmitters are connected to or integrated into microphones, televisions, phones, or other video/audio/media sources, converting audio and/or video received from these sources. This allows for ultra-high quality private broadcasts and reception. The smartphone, personal data assistants and/or other audio/video electronic devices programming also allows identification, commenting and bookmarking of received audio/video, transfer of the audio/video to other devices, transcription of the audio, and other manipulation of the received signals. When specified, the device application requires payment before enabling a recording option, protecting the copyrights of a performer/presenter.

## Description

This application claims the benefit of U.S. provisional patent application serial number 61/349,320, filed May 28, 2010, which is hereby incorporated by reference in its entirety.

### BACKGROUND

The present invention relates generally to the field of wireless communications and smartphone applications.

Previous and existing technology and applications use smart phones as a tape recorder. The quality of the recording is dependent on the smartphone's proximity to the speaker and the lack of acoustic noise interference in the direct vicinity of the phone. The existing technology will allow the video recording of the proceedings with the smartphone, but only from the vantage point of the observer.

Previous and existing technologies do not provide for effective and timely audio/video broadcast via single or multiple WiFi transmitters to smart phones or other similar WiFi enabled commercial electronic components or personal data assistant devices.

Previous and existing technology that transmits digital data content via the internet to such components, including smart phones or other similar WiFi enabled devices, is prone to saturation of the cell towers or other transmitting networks when attempting to connect several or thousands or a multitude of users simultaneously to the internet.

Previous and existing technologies use low frequency radio transmitters to transmit the sound signal from transmission devices, such as muted TV, to a local receiver and speaker box, and all individuals in a given group have to listen to the same channel.

Needs exist for improved devices and methods for transmitting and receiving audio and video in various environments.

### SUMMARY

It is to be understood that both the following summary and the detailed description are exemplary and explanatory and are intended to provide further explanation of the invention as claimed. Neither the summary nor the description that follows is intended to define or limit the scope of the invention to the particular features mentioned in the summary or in the description.

In certain embodiments, the disclosed embodiments may include one or more of the features described herein.

A new device uses wireless transmission, capturing the sound, and in the case of a video recording the sights, without the interference presented by a smartphone or other Personal Digital Assistant (PDA) device receiver's listening port (or ear piece or Bluetooth device) being distanced from the source of the sound or the object of the video recording. In many embodiments, especially in commercial and business settings or presentations by motivational speakers, or in sporting events or even smaller venue concerts and gatherings, an audio/video recording is set up in the location. In the new application, the sights and sounds from this location or venue are directly transmitted to electronic devices such as smart phones, personal data assistants and/or other audio/video devices. One additional advantage of the device is the ability to allow hearing impaired participants to listen directly to the presentation via the smartphone or other PDA receiver's listening port (or ear piece or Bluetooth device) without interference from outside noises or interference and delays from other networks or inputs. An additional advantage for the severely hearing impaired participant is the conversion from audio to text with the text being displayed on-screen on a smartphone.

A new device allows the reception of a secondary signal from a TV, PDA or other audio/visual type device at any location in a locale (e.g. commercial/public venue, sports events, sports bar, etc.) and allows each individual in a group to select his/her preferred program and service.

A new system includes one or more new transmitters that convert an audio or video signal into a wireless communication signal and a computing device with a specially designed and programmed processor. The computing device is programmed to identify wireless communications signals from transmitters, display to a user available transmitter signals, allow a user to select from available transmitter signals, and convert a selected transmitter signal to audio (and visual) content. In one embodiment, the computing device is programmed to record a selected transmitter signal or audio converted from the selected transmitter signal. In some such embodiments, the computing device is programmed to enable the user to identify a recorded lecture or presentation by date, time and subject, or to allow the user to bookmark sections of the recordings and make notations on an electronic notepad.

In one embodiment the transmitters are connected to audio-out connections of audio/video components, TV sets or TV control boxes and convert the audio signal from the audio-out connections. In one embodiment the transmitters are connected to or incorporated into microphones, speakers, video recorders or telephones. In one embodiment, the one or more transmitters convert a video signal into a wireless communication signal and the computing device is programmed to convert a selected transmitter signal to video display or recording. In one such embodiment, the one or more transmitters are connected to or incorporated into video recording devices.

A new apparatus includes a computing device with a processor, where the computing device is programmed to identify wireless communications signals from a transmitter, display to a user available transmitter signals, allow a user to select from available transmitter signals, and convert a selected transmitter signal to audio.

A new computer program product is stored on a non-transient computer readable medium and the method including the said program product includes identifying transmitted wireless communications signals, displaying to a user available transmitted signals, allowing a user to select from available transmitted signals, and converting a selected transmitted signal to audio and/or video.

A new system has distinct software modules embodied on a non-transient computer-readable medium. The distinct software modules include a transmitted signal identification module, a transmitted signal display module, a transmitted signal selection module, and a transmitted signal audio conversion module.

In a new method, an audio signal is converted into a wireless communication signal, the wireless communication signal is detected, detected wireless communication signals are displayed to a user, a user's selection of a detected wireless communication signal is received, the wireless communication signal is converted into an audio signal, and the audio signal is output or recorded and/or displayed as text on the screen of the smartphone or PDA.

A device converts the output from a microphone, video recorder or speaker telephone or a combination of these components into a wireless signal to be identified by the smartphone, personal data assistants and/or other audio/video devices allows the real time display of the proceedings, whether audio only or video or both on the smartphone or allows for the recording of the proceedings.

The software embedded in the smartphone, PDA and/or other audio/video devices, i.e. the application, allows for the protection of the transmission. The application also allows for the processing of payment information to authorize the smartphone user to access the transmission. The payment information portion of the application interfaces with an external program such as 'PayPal" or similar internet payment providers. This feature allows the presenting entity to collect payment for the recording without actually selling any "hard items" such as CDs.

Thus, a live performer or music act using a system as described can sell a high-quality recording of a particular performance to the audience members during or immediately after the performance, essentially instantaneously and without the need for queuing or the like. In some such embodiments, the smartphone application requires payment before enabling a recording option, protecting the copyrights of the performer/presenter.

A new system includes a computing device with a processor. The computing device is configured to identify wireless communications signals from one or more transmitters, display to a user available transmitter signals, allow a user to select from available transmitter signals, and convert a selected transmitter signal to audio. The system also includes one or more transmitters, and the transmitters convert an audio or video signal into a wireless communication signal. The computing device is configured to record a selected transmitter signal or audio converted from the selected transmitter signal. The computing device may be further configured to enable the user to identify a recorded lecture or presentation by date, time and subject. The computing device may be further configured to allow the user to bookmark sections of the recordings and make notations on an electronic notepad.

In some embodiments, the computing device may be configured for communicating its presence through the transmitters to another computing device in the same area and to communicate with the another computing device and to allow a user to control the communication.

In some embodiments, the one or more transmitters convert a video signal into a wireless communication signal and the computing device is further configured to convert a selected transmitter signal to video display. The one or more transmitters may be connected to or incorporated into video recording devices.

In a new method, an audio or video signal is converted into a wireless communication signal, the wireless communication signal is detected, detected wireless communication signals are displayed to a user, a user's selection of a detected wireless communication signal is received, the wireless communication signal is converted into an audio or video signal, the audio or video signal is output or recorded, and the location or product of a specific transmitter location or venue is branded.

One method of configuring a computing device is by programming it. The methods disclosed herein may be carried out by a computing device or system programmed or otherwise configured with appropriate software or hardware. In many embodiments a smartphone is specially programmed with software residing in a storage device of the smartphone, which accesses one or more processors and other resources (e.g. memory, network interface, display, inputs/outputs, peripheral devices) via one or more buses to carry out various processes and instructions.

These and other objectives and features of the invention are apparent in the disclosure, which includes the above and ongoing written specification.

### BRIEF DESCRIPTION OF THE DRAWINGS

The accompanying drawings, which are incorporated herein and form a part of the specification, illustrate exemplary embodiments and, together with the description, further serve to enable a person skilled in the pertinent art to make and use these embodiments and others that will be apparent to those skilled in the art.
FIG 1 shows a TV transmitting the TV audio wirelessly to smart phones.
FIG. 2 shows a microphone and video camera transmitting audio and video wirelessly to smart phones.
FIG 3 shows a conference phone/microphone and video camera transmitting audio and video wirelessly to smart phones.
FIG 4 is a diagram of a TV transmission and reception system.
FIG 5 is a diagram of a portion of a TV transmission and reception system.
FIG 6 is a diagram of a microphone and video recorder transmitting a signal to a smart phone.
FIG 7 is a diagram of a microphone, phone, and video recorder transmitting a signal to a smartphone.
FIG 8 is a diagram of multiple transmitters placed at various distinct and separate locations, each transmitting local audio/video content to a smartphone.
Fig 9 is a diagram of the interfaces between the local WiFi transmitter, a smartphone and a computerized cash register/order computer.
Figure 10 is a diagram of a system with multiple TVs providing audio output to a smartphone via a local transmitter, with the smartphone transmitting bets to a local sportbook computer via the local WiFi transmitter.
Figure 11 is a diagram of a system where two or more smart phones, connected to the same transmitter in the same location can recognize each other's content and establish contact.
Figure 12 is a basic schematic of a simple single channel transmitter.
Figure 13 is an expanded schematic of a multi-channel transmitter.

### DETAILED DESCRIPTION

A system, computer program, device and method for transmitting and receiving audio and video in various environments will now be disclosed in terms of various exemplary embodiments. This specification discloses one or more embodiments that incorporate features of the invention. The embodiment(s) described, and references in the specification to "some embodiments", "one embodiment", "an embodiment", "an example embodiment", etc., indicate that the embodiment(s) described may include a particular feature, structure, or characteristic. Such phrases are not necessarily referring to the same embodiment(s). When a particular feature, structure, or characteristic is described in connection with an embodiment, persons skilled in the art may effect such feature, structure, or characteristic in connection with other embodiments whether or not explicitly described.

In the several figures, like reference numerals may be used for like elements having like functions even in different drawings. The figures are not to scale. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail.

Any smartphone (e.g. iPhone^{®}, Android^{®}, BlackBerry^{®}, etc) or PDA has the ability to receive signals from various transmitting devices. A new audio and/or video transmission and reception system employs smart phones (and PDAs) as receivers for audio and/or video transmissions. The system enables users to listen and/or view the transmission in real time and/or record the transmission for later playback, either on the smartphone or a compatible computer to which the smartphone is docked. The system uses wireless communication between the transmitter and the receiving smartphone and is not dependent on the fidelity of sound in the vicinity of the receiver or the absence of visual obstructions between the user and the object of the video recording. In some embodiments, the smartphone or PDA is configured to receive these signals by the installation of an "application" that lets the smartphone or PDA recognize the source of the signal and enables the smartphone to perform as outlined above.

Smart phones or PDA enable users to install applications beyond games and two way communication. In fact, in several embodiments smartphone applications, in conjunction with installed hardware (i.e. transmitters), transform the smartphone into a new business and entertainment tool. Smartphone or PDA devices can receive signals from various local WiFi transmitters and/or repeaters (slave transmitters) and in conjunction with the appropriate application can discriminate and select between the various input signals and either provide real time audio and video output or store the transmission as an audio/video file to be played back or transcribed to a computer or other device at a later time.

In one embodiment, users of a smartphone select an audio channel from a transmitter-equipped TV screen, such as are common in sports bars and other public places. In one embodiment, users are able to audit and record university class room lectures, business meetings and seminar presentations and live concerts and performances without worrying about sound fidelity or visual obstructions during the presentation.

In one embodiment, an audio transmitter with a specific sending frequency is attached to the "audio out" of a TV set or TV control module. The transmitter wirelessly transmits the audio signal to the smartphone which, being enabled by the appropriate application, converts the transmitted signal into sound and/or allows the operator to record the audio transmission without interference from any other noise sources in the vicinity of the receiver. This system has applicability to sports bars where there are multiple TV screens but the sound is muted, as well as any other public or private venue where "for public use" TV is broadcast, but without the sound. The application enables a smartphone to discriminate between various signals assigned to each discrete channel/TV screen, and lets the operator select which channel to listen to.

In some embodiments, each transmitter is assigned a different frequency so that the smartphone application can distinguish between the transmitted signals and the signals do not "talk over each other". The transmitter in one embodiment is assigned its transmission frequency at the factory, and in one embodiment on installation.

In some embodiments the audio signal, transmitted via the WiFi receiver to the smartphone, is converted to text and displayed on the screen of the smartphone or PDA. This text may be displayed in conjunction with accompanying visual materials, such as video or pictures or presentation materials. The smartphone may be programmed to process the audio signal in order to integrate it into or make it compatible with audio-to-text conversion software.

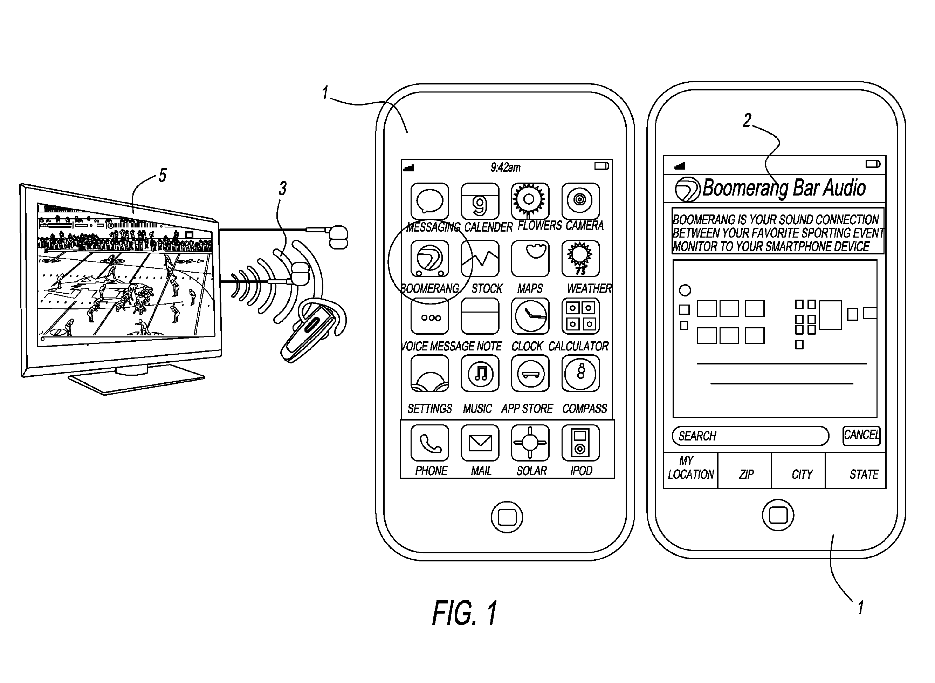

FIG. 1 shows a TV **5** with installed transmitter **3** transmitting the TV audio signal wirelessly to smart phones **1** programmed with a software application **2** that receives and manipulates the TV audio signal. This embodiment is typically used in an environment with several TV screens (e.g. in sport bars), where each TV has an individual installed transmitter. The transmitters send the muted audio output of the TV screen to the receiver in the -smartphone. The user activates the installed application and selects the appropriate transmitter of interest. The user may choose to listen to the broadcast event, either through an earpiece or the installed speaker of the smartphone. Alternatively, a common selector box might be used to transmit the individual audio signals, each with its own assigned frequency, to the smartphone.

In one embodiment, a transmitter with a specific sending frequency is attached to a microphone or video recording device such as might be used by a presenter in a lecture hall, a business seminar or at a business meeting or live concert or entertainment (or any other performance or presentation or similar occasion). The transmitter wirelessly transmits the audio and/or video signal to the smartphone which, being enabled by the appropriate application converts the transmitted signal into sound and/or video display and/or allows the operator to record the audio/video transmission without interference from any other noise sources or visual obstructions in the vicinity of the receiver.

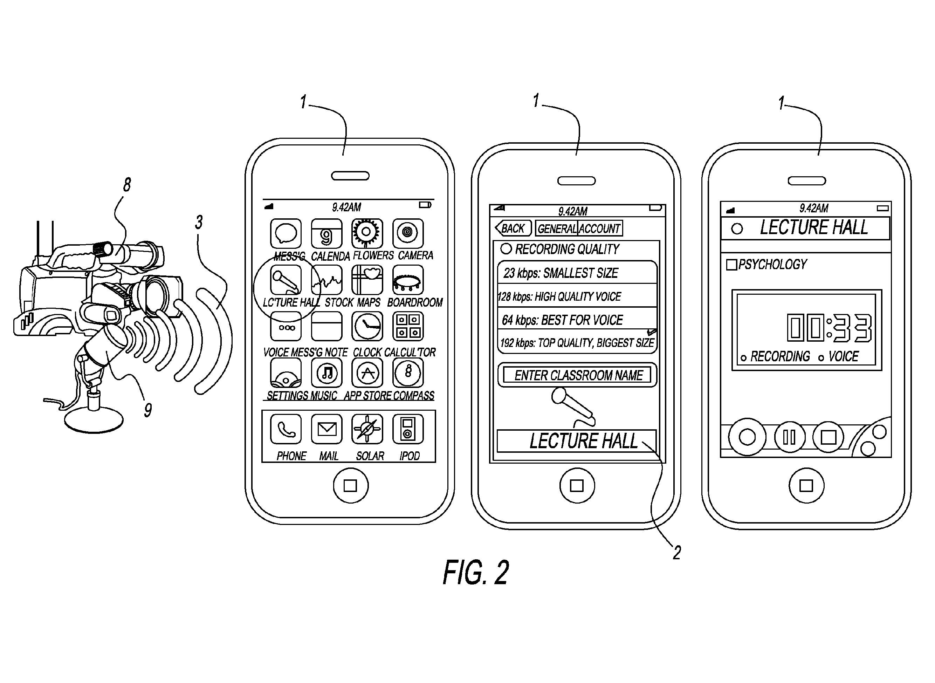

FIG. 2 shows a microphone **9** and video camera **8** connected to a transmitter **3** transmitting an audio and video signal wirelessly to smart phones **1** programmed with a software application **2** that receives and manipulates the audio and video signal. This embodiment is useful for example in lecture hall setting, as might be found at any large university, at a business convention or any other live presentation. The lecturers or performers are equipped with a microphone that transmits the sounds via transmitter **3** to the smartphone. In some embodiments, the presentation is video recorded and the video signal is transmitted to the smartphone. The listener/viewer enables the smartphone, through the installed application, to record the proceedings. All transmissions can be code protected, accomplished within the application to allow only authorized users to access the audio/video presentations. If payment is required to view or record the proceedings, authorization to view or record the transmissions can be accomplished by payment through PayPal or similar programs, activated at the time of the proceedings.

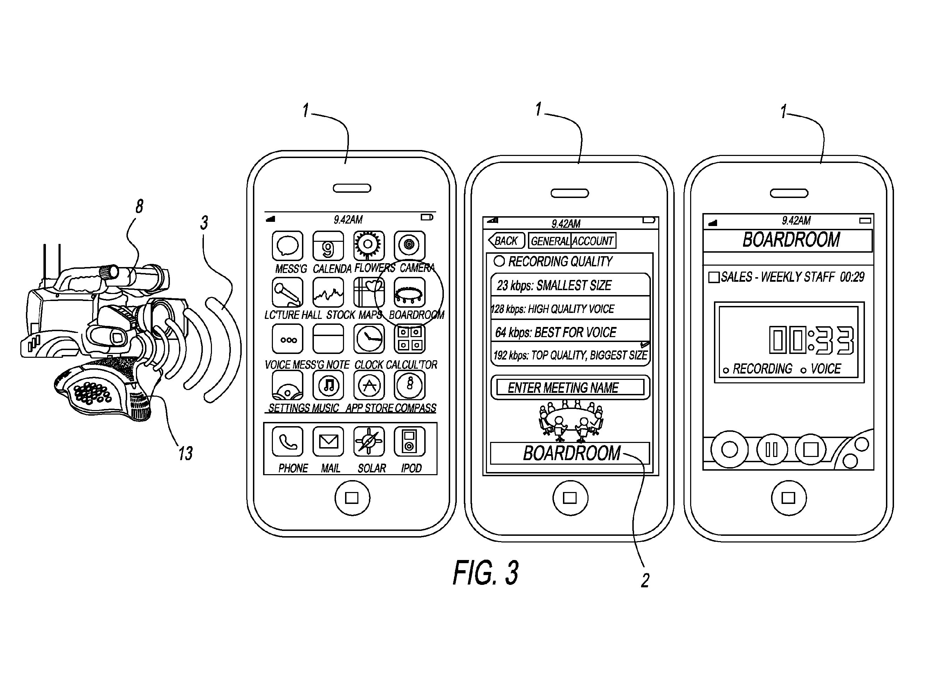

FIG. 3 shows a conference phone/microphone **13** and video recorder **8** connected to a transmitter **3** transmitting an audio and video signal wirelessly to smart phones **1** programmed with an application **2** that receives and manipulates the audio and video signal. This is useful for example at a business meeting with either a central microphone or strategically placed microphone or video recorder connected to a transmitter. The transmitter relays the audio and video presentation to anyone equipped with a smartphone. Again, the installed application allows the user to listen to, and/or view and record the proceedings or to be replayed later or transcribed to a computer. Further manipulation of the recording with other software is also possible. Transmissions can be code protected, within the application, to allow only authorized users access to the transmissions.

This system has applicability in a setting where a presenter might use a microphone or video recorder to address a large number of listeners, such as in a large lecture hall in a university. The system also has applicability in virtually any business setting, where the participants want to keep accurate record of the proceedings without having to be in a location critical to record the human voice without any noise interference. In certain embodiments, the application enables the user to identify by date, time and subject the recorded lecture or presentation. Additionally, the application allows the user to bookmark sections of the recordings as well as make notations on a separately enabled notepad. These notations can be associated with the recording in a known fashion.

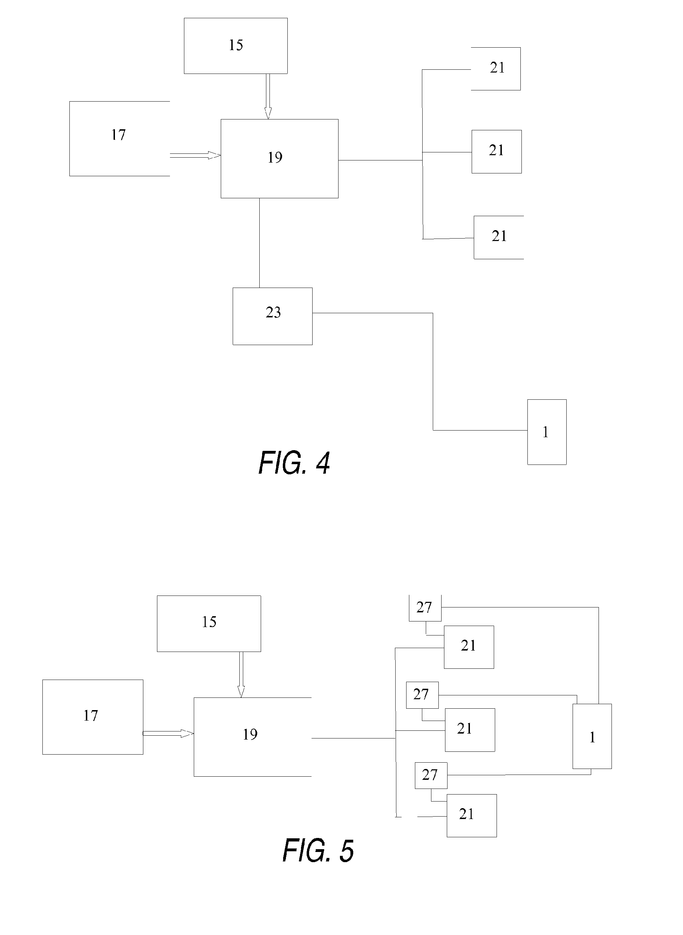

FIG. 4 is a diagram of a TV transmission and reception system. A TV signal from a satellite **15,** or DirectTV or another television provider **17,** is sent to audio/video control box **19.** From there, the signal is sent to televisions **21.** The audio portion of the signal is sent to an audio sending box **23,** which transmits the audio signal through the use of discrete frequencies to a smartphone **1.**

FIG. 5 is a diagram of a portion of an alternative TV transmission and reception system. In this diagram, instead of the audio sending box **23** transmitting the audio to a smartphone **1,** an audio signal transmitter **27** is attached to the individual TV, which in turn transmits the audio to smartphone **1.**

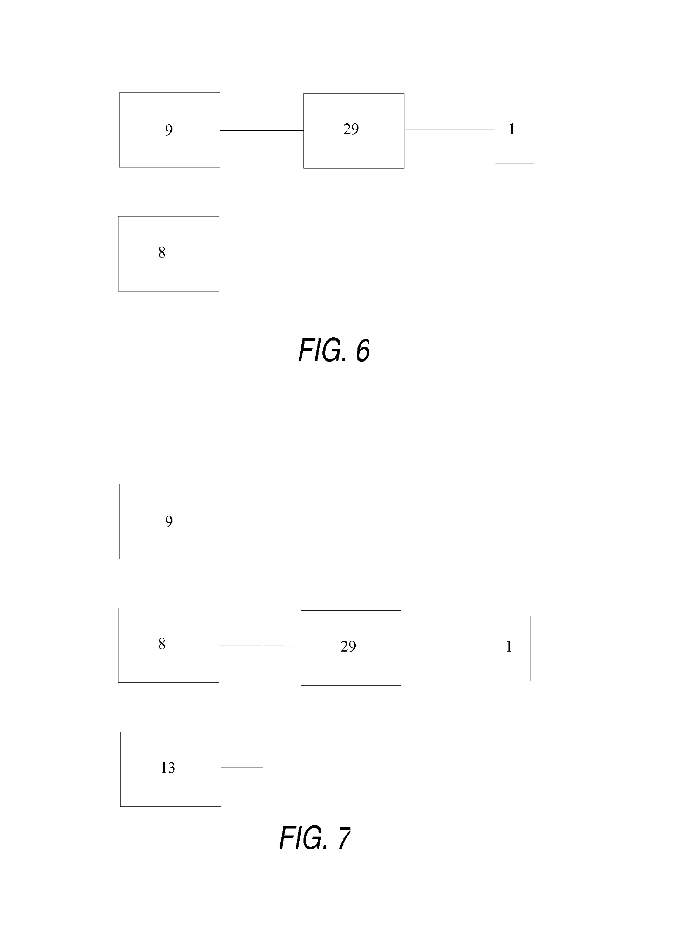

FIG 6 is a diagram of a microphone and/or video recorder transmitting a signal to a smart phone. In this diagram, a microphone **9** and video camera **8** are connected to a transmitter **29** that transmits audio and video signals wirelessly to smartphone **1.** Typically, only one device would be connected to the transmitter, the microphone if no video camera is present, the video camera if it is present, since it carries both audio and video signals. However, in certain circumstances multiple devices in the same area are connected to a single transmitter or to separate transmitters. In some embodiments where multiple devices are connected to a single transmitter, the transmitter combines the signals and transmits them as a single signal, in some embodiments the transmitter transmits the signals separately. In some embodiments, with one transmitter or multiple transmitters sending separate signals, the smartphone application combines the received signals.

FIG 7 is a diagram of a microphone, phone, and video recorder transmitting a signal to a smartphone. The microphone **9,** video camera **8,** and phone **13** are connected to a transmitter **29** that signals wirelessly to smartphone **1.** An example of a situation in which a transmitter would receive multiple input signals is in the case of a teleconference, where some of the audio input to the transmitter is in one embodiment received over the telephone line, while other audio input is received by the transmitter from the phone's microphone or another microphone closer to the speaker.

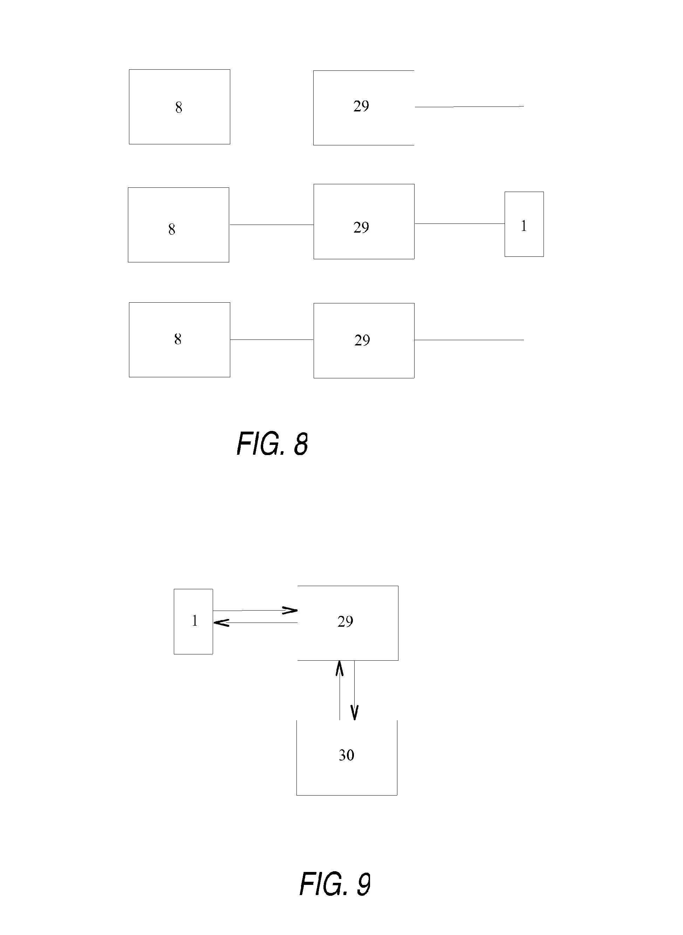

FIG 8 is a diagram of multiple video recorders transmitting a signal to a smartphone. In this diagram, a video camera **8** is connected to a transmitter **29** that transmits audio and video signals wirelessly to smartphone **1.** This arrangement is repeated as many times as there are separate events to be monitored in one location. Typically, only one device would be connected to the transmitter. However, in certain circumstances multiple devices in the same area are connected to a single transmitter or to separate transmitters.

In some embodiments where multiple devices are connected to a single transmitter, the transmitter combines the signals and transmits them as a single signal, in some embodiments the transmitter transmits the signals separately. In some embodiments, with one transmitter or multiple transmitters sending separate signals, the smartphone application combines the received signals. The smartphone application will allow the user to switch between the various transmitters to view and record the activity that is video recorded at a specific location. In one exemplary embodiment, a transmitter is located at each hole on a golf course during a tournament. The user of the smartphone would be able to select any one of the transmitters to listen and/or view the action at that particular hole while at another location on the golf course.

FIG 9 is a diagram of a single transmitter **29** providing content from a local restaurant/bar computer **30** to the smartphone **1.** The smartphone user can view the menu and order via the smartphone which communicates the order to the transmitter, which in turn transmits the order to the bar/restaurant register. In some embodiments this system can be used at resorts or on cruise ships to view activities and sign up for certain activities by using the smartphone and local transmitter. In an exemplary embodiment, a guest at a hotel equipped with a local WiFi transmitter views the restaurant menu and orders food, all while sitting at the pool with a smartphone.

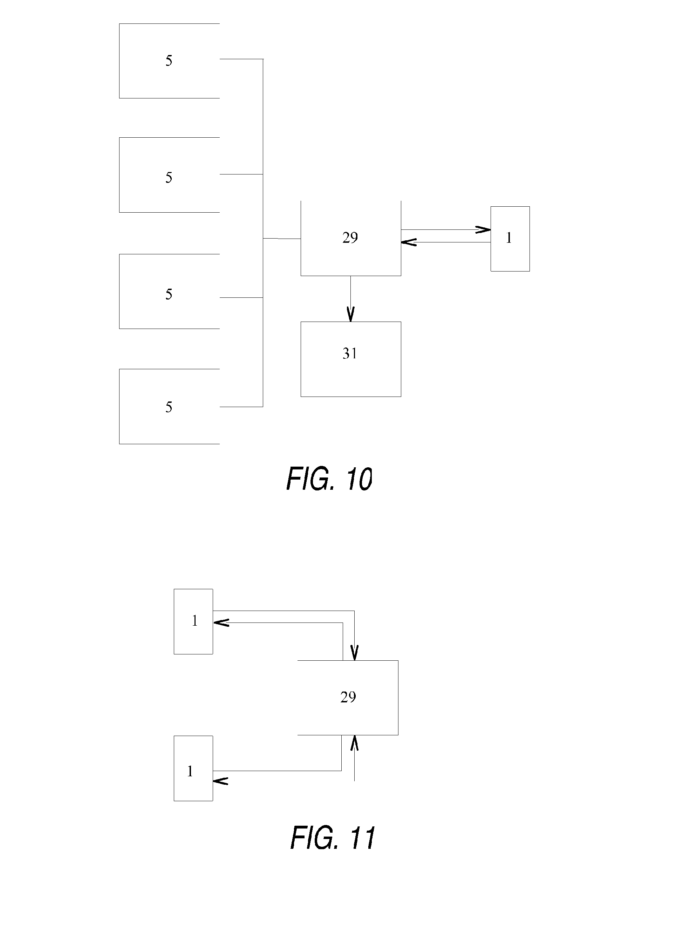

FIG 10 is a diagram of a system of multiple TV screens **5** such as are found in sportsbooks or other legal gambling locales, providing audio via a local transmitter **29** to the smartphone **1.** The smartphone **1** can communicate bets via the local transmitter to the sportbook's betting computer **31.**

FIG 11 is a diagram of a system where two or more smart phones **1,** connected to the same transmitter **29**, recognize the presence of each other, if this function is enabled by the appropriate application, and allow communication via the local transmitter without revealing the phone numbers associated with each device. This provides a social networking functionality.

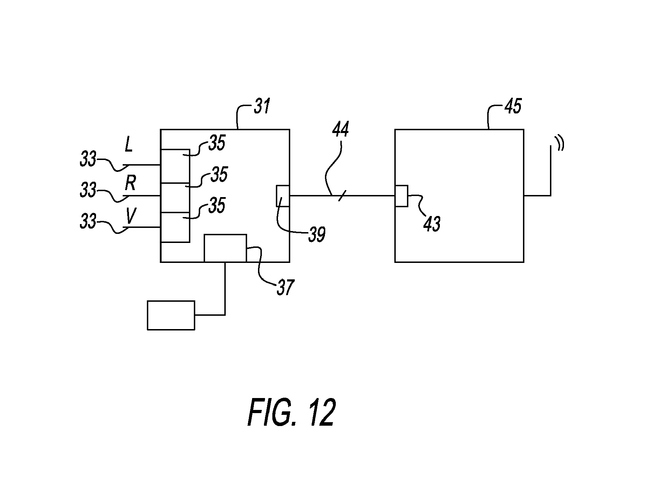

FIG 12 is a simplified diagram of typical components that constitute the single channel transmitter. It is recognized that other similar components, code applications, libraries and connection devices may achieve the same results. K50 chip **31** includes left, right, and video audio/video ("A/V") inputs **33** connected to analog-to-digital (A/D) converters **35** and high definition multimedia interface (HDMI) input **37** and media access controlled (MAC) interface 39. The K50 chip **31** is connected by Ethernet **41** to MAC interface **43** of x8787 chip **45,** from which a signal is transmitted.

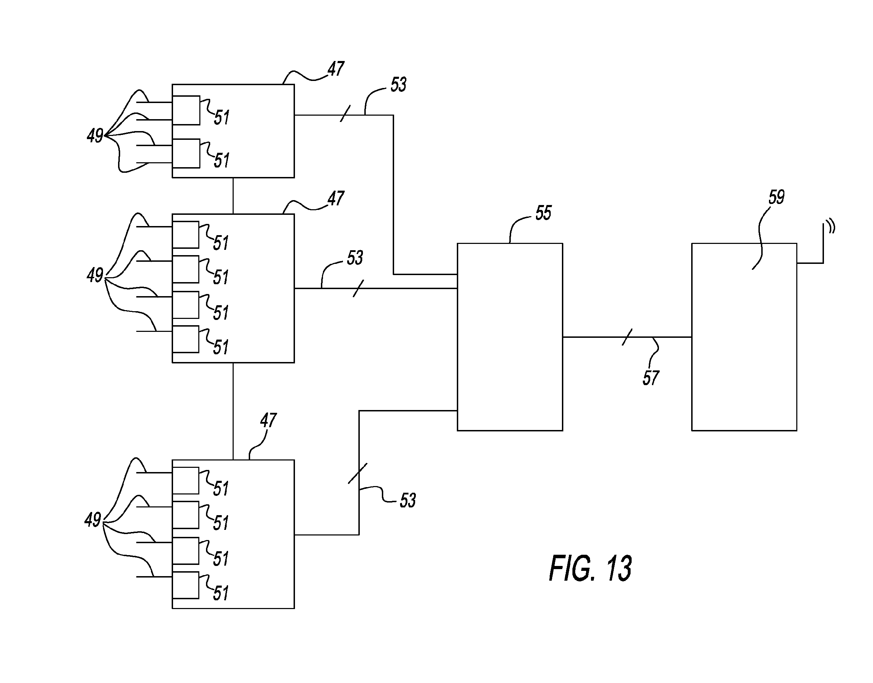

FIG 13 is a simplified diagram of a multi channel transmitter with multiple inputs. Similar components, code applications, libraries, and connection devices could be used to achieve the same functionality as the components identified in this diagram. Floating point x6748 DSPs **47** have A/V inputs **49** connected to A/D converters **51** and connect via MAC interfaces **53** with Ethernet switch chip **55.** Ethernet switch chip **55** connects via a custom interface **57** with a WiFi chip **59,** such as an 802.3 b,g,n Bluetooth^{®} 4.0 chip, from which a signal is transmitted.

It should be understood that the invention is not limited to smart phones. Any comparable electronic device such as personal digital assistants and/or other audio/video devices can be used to receive the transmitted signals and to display, record, and process them. Wherever smart phones are referred to above, any computing device such as hand-held computing devices like PDAs, laptops or netbooks, smart watches, smart viewers or other IP devices, or even desktop computers may be substituted. While the necessary software applications must be adapted for the hardware of various devices, such modifications are generally within the ability of a person skilled in the art.

The smartphone applications and related technology are of great interest to users of smart phones who frequent sports bars, are students at universities or schools with large auditoriums or class rooms, or are participants in business seminars or large corporate meetings, and to sports bars, schools, and organizations, government entities, large corporations, and motivational speakers that put on business seminars/meetings. The system can be distributed through businesses that provide entertainment TV and audio packages to sports bars, and that specialize in selling business and AV equipment to schools, universities, large business and government organizations and the entertainment industry. Another distribution channel is entertainment production companies that record live performances for resale in the form of a CD.

The invention is not limited to the particular embodiments described above in detail. Those skilled in the art will recognize that other arrangements could be devised, for example, various tools for manipulating received audio and/or video on a smartphone or other device, various devices into which a transmitter is integrated, and various types of wireless signals that are transmitted. The invention covers any audio or video signal source, including but not limited to telephones, microphones, TVs, audio-video recorders, amplifiers, and similar systems. While the invention has been described with reference to specific illustrative embodiments, modifications and variations of the invention may be constructed without departing from the scope of the invention.

## Claims

1. A system, comprising:
a computing device with a processor;
wherein the computing device is configured to identify wireless communications signals from one or more transmitters, display to a user available transmitter signals, allow a user to select from available transmitter signals, and convert a selected transmitter signal to audio.

2. The system of claim 1, further comprising the one or more transmitters, wherein the transmitters convert an audio or video signal into a wireless communication signal.

3. The system of claim 2, wherein the transmitters are connected to audio-out connections of audio/video equipment and convert the audio signal from the audio-out connections.

4. The system of claim 3, wherein the transmitters are configured to communicate with a third party computing device and to transmit communication from the computing device to the third party computing device to enable interaction between the two.

5. The system of claim 2, wherein the computing device is configured for communicating its presence through the transmitters to another computing device in the same area.

6. The system of claim 2, wherein the transmitters are connected to or incorporated into microphones, speakers, video recording devices, hand-held personal electronic devices or telephones.

7. The system of claim 6, wherein a portable transmitter is connected to a microphone worn by a speaker.

8. The system of claim 2, further comprising slave transmitters or existing WiFi transmitters configured to expand the range of the transmitters.

9. A computer program product stored on a non-transient computer readable medium, the method comprising the said program product comprising:
identifying transmitted wireless communications signals, displaying to a user available transmitted signals, allowing a user to select from available transmitted signals, and converting a selected transmitted signal to audio.

10. A method, comprising:
converting an audio or video signal into a wireless communication signal,
detecting the wireless communication signal,
displaying detected wireless communication signals to a user,
receiving a user's selection of a detected wireless communication signal,
converting the wireless communication signal into an audio or video signal,
and outputting or recording the audio or video signal

11. The method of claim 10, further comprising accepting payment information electronically prior to outputting or recording the audio signal.

12. The method of claim 10, further comprising displaying to the user promotional material for a business at a transmitter location or venue.

13. The method of claim 10, further comprising receiving wireless communication from a local computing device and transmitting wireless communication to a local computing device.

14. The method of claim 10, wherein the converting an audio or video signal into a wireless communication signal comprises converting multiple audio or video signals in a single location into wireless communication signals and the detecting the wireless communication signal comprises detecting multiple wireless communication signals in a single location.

15. The method of claim 10, further comprising processing the audio file and displaying contents of the audio file as text.
